Europäisches Patentamt

European Patent Office

Office européen des brevets

(11) Numéro de publication: **0 416 977 A1**

## DEMANDE DE BREVET EUROPEEN

(21) Numéro de dépôt: **90402366.0**

(22) Date de dépôt: **27.08.90**

(51) Int. Cl.5: **F02B 55/14**

(30) Priorité: **06.09.89 FR 8911656**

(43) Date de publication de la demande:
**13.03.91 Bulletin 91/11**

(84) Etats contractants désignés:
**DE GB IT SE**

(71) Demandeur: **Boyer, Raynald**
**35, rue Léo Lagrange**
**F-93000 Bobigny(FR)**

(72) Inventeur: **Boyer, Raynald**
**35, rue Léo Lagrange**
**F-93000 Bobigny(FR)**

(74) Mandataire: **Sauvage, Renée**
**Cabinet Sauvage 100 bis, avenue de**
**Saint-Mandé**
**F-75012 Paris(FR)**

(54) **Moteur à explosion du type rotatif.**

(57) Le moteur comprend un stator (24a) formant enveloppe et un rotor (1) formant piston, les chambres d'explosion étant définies par la venue en vis-à-vis de découpes (5a-5d) ménagées dans la périphérie du piston (1) en forme de disque et de renflements (26a-26d) ménagés dans la periphérie de l'enveloppe circulaire (24a).

Dans l'épaisseur du piston (1), entre chaque groupe de deux découpes (5a-5b), dit "espace interdécoupes" (I), est menagé un passage (58) débouchant dans l'une des découpes (5a) et en communication avec un canal d'échappement (15), ledit passage (58) recevant la queue (13) d'une soupape d'échappement dont la tête (12) est adaptée à permettre ou à interdire la communication entre le passage (58) et la chambre d'explosion correspondante (34).

FIG6

EP 0 416 977 A1

## MOTEUR À EXPLOSION DU TYPE ROTATIF.

La présente invention concerne un moteur à explosion du type rotatif.

Plus précisément, elle concerne un moteur comprenant un stator formant enveloppe et un rotor formant piston, l'enveloppe et le piston définissant ensemble des chambres d'explosion munies de moyens d'allumage et alimentées en carburant et en air, ledit piston étant constitué d'une pièce ayant généralement la forme d'un disque dans l'épaisseur de la périphérie duquel sont ménagées autant de découpes que de chambres d'explosion et ladite enveloppe étant constituée d'au moins deux pièces formant une structure généralement circulaire dans la périphérie de laquelle sont ménagés autant de renflements que de chambres d'explosion, lesdites chambres d'explosion étant définies par la venue en vis-à-vis d'une découpe du piston et d'un renflement de l'enveloppe.

On connaît d'après FR-A-401 041, un moteur rotatif de ce type dans lequel l'admission d'air et de carburant et l'échappement des gaz brûlés se font respectivement par des tubulures en communication avec des passages traversant radialement, et de part en part, la périphérie de l'enveloppe, en amont et en aval des renflements de l'enveloppe, lesdites tubulures se trouvant obturées par la paroi du piston sauf quand une découpe du rotor vient en vis-à-vis desdits passages.

Un tel système ne permet aucun réglage de l'échappement.

L'invention remédie à cet inconvénient en proposant un moteur rotatif du type précité qui se caractérise en ce que, dans l'épaisseur du piston, entre chaque groupe de deux découpes, dit espace "inter-découpes", est menagé un passage débouchant dans l'une des découpes et en communication avec un canal d'échappement, ledit passage recevant la queue d'une soupape d'échappement dont la tête est adaptée à permettre ou à interdire la communication entre le passage et la chambre d'explosion correspondante.

Chaque espace inter-découpe reçoit, en outre, des moyens de retenue et de réglage, ainsi que des moyens de rappel agissant sur la queue de soupape.

Les canaux d'échappement susceptibles d'être mis en communication avec les chambres d'explosion convergent radialement vers un collecteur central réuni à une sortie d'échappement.

Dans une forme de réalisation pratique de l'invention, l'enveloppe est constituée de deux demi-coquilles de section sensiblement circulaire adaptées à être assemblées en vis-à-vis, avec inclusion du piston entre elles.

D'autres caractéristiques et avantages de l'invention ressortiront de la description ci-après faite en référence aux dessins annexés dans lesquels:

- La figure 1 est une vue en coupe schématique du piston seul.
- La figure 2 est une vue d'une demi-coquille observée de l'intérieur.
- La figure 3 est une vue de l'assemblage du piston de la figure 1 et de la demi-coquille de la figure 2, avec représentation de moyens de graissage possibles pour les roulements
- La figure 4 est une coupe prise partiellement selon la ligne IV-IV de la figure 3.
- La figure 5 est une vue en coupe prise selon la ligne V-V de la figure 3.
- La figure 6 est un détail à plus grande échelle d'une partie du piston vu en coupe.
- La figure 7 montre schématiqement la structure de moyens de graissages possibles pour le piston.

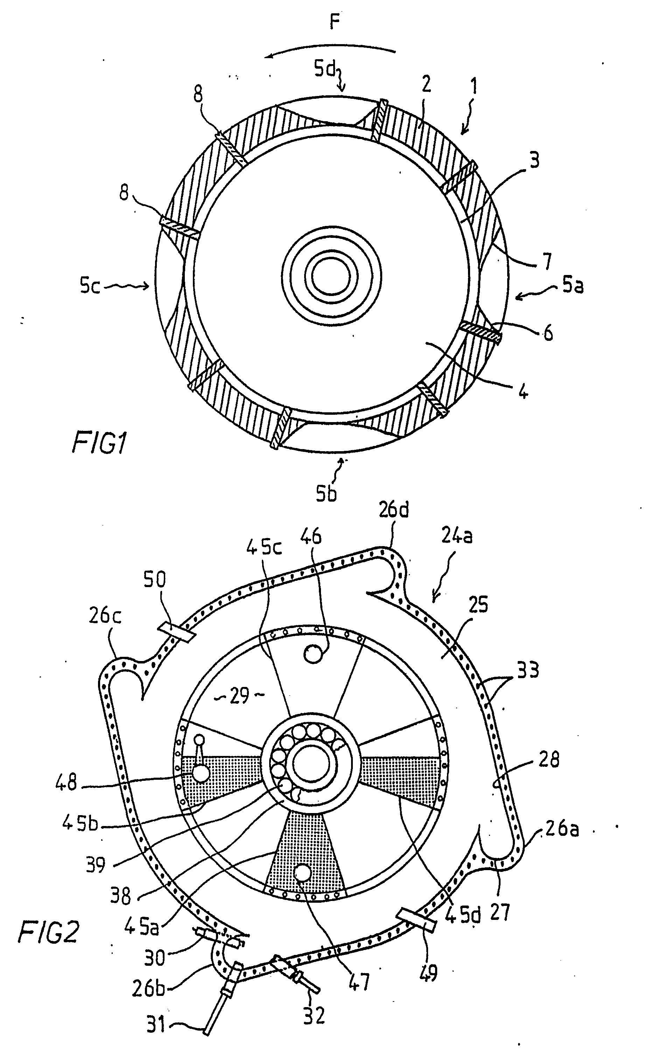

Si l'on examine la figure 1, on voit un piston 1 ayant grossièrement la forme d'une roue. Plus précisément, la partie utile 2 du piston correspond au pneumatique de la roue, la zone 3 à la jante et la partie centrale pleine 4 à la roue proprement dite. Comme on le voit, des découpes 5a-5d sont ménagées dans la périphérie de la partie 2. Si l'on admet que le piston tourne dans le sens de la flèche F, chaque découpe comporte un bord d'attaque 7 et un bord de fuite 6. La référence 8 désigne des segments.

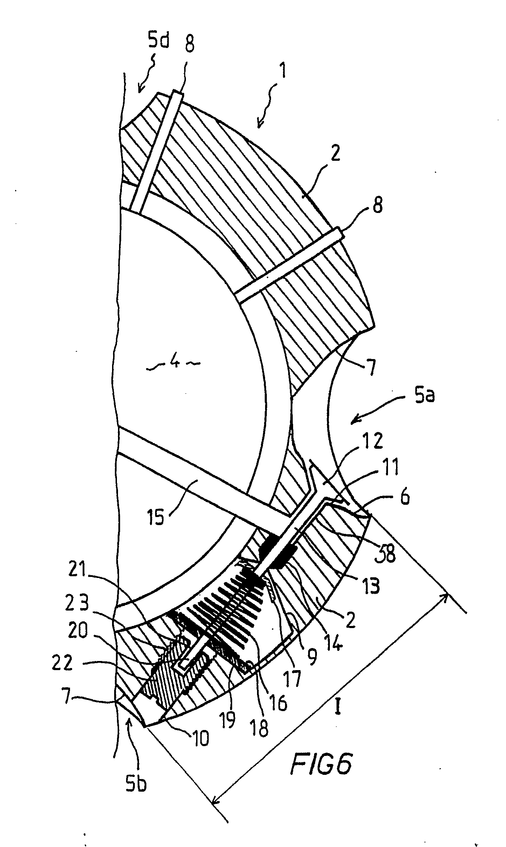

Le détail de la structure du piston 1 ressort plus clairement de la figure 6. Ainsi, comme on le voit, entre la découpe 5a et la découpe 5b, il est ménagé dans l'espace inter-découpes I un passage 58 qui débouche dans une cavité 9 accessible depuis la découpe 5b par un perçage 10. Le passage 58 débouche par un orifice 11 dans la découpe 5a. Cet orifice 11 est susceptible d'être obturé par la tête 12 d'une soupape dont la queue 13 est reçue dans le passage 58. Une garniture d'étanchéité 14 interdit la communication de fluide entre le passage 58 et la cavité 9. En amont de cette garniture d'étanchéité 14, vu dans le sens de l'échappement des gaz, est prévu un canal d'échappement 15 en communication avec le passage 58. Dans la cavité 9 est logé un ressort 16 qui prend appui, d'une part, sur une rondelle 17 solidarisée à la queue de soupape et, d'autre part, sur une rondelle d'arrêt 18 reposant sur un épaulement 19 créé au niveau de la communication du perçage 10 avec la cavité 9. L'extrémité 20 de la queue de soupape opposée à la tête 12 est reçue dans un évidement 21 ménagé à cet effet dans une vis de réglage 22 dont le filetage vient en prise avec un filetage correspondant 23 prévu dans la paroi du perçage 10.

A la figure 6, la soupape est représentée en position d'échappement, c'est à dire que sa tête 12 ne repose pas sur le siège ménagé dans le bord de fuite 6 de la découpe 5a. Les moyens utilisés pour ouvrir ainsi la soupape ne sont pas représentés. Il est bien entendu que l'aménagement prévu entre les découpes 5a et 5b qui vient d'être décrit par référence à la figure 6 est également prévu entre chaque autre couple de découpes et que l'on n'a pas représenté cet aménagement pour ne pas surcharger les dessins.

Si l'on examine maintenant la figure 2, on voit une demi-coquille 24a ayant en coupe une forme sensiblement circulaire. Cette demi-coquille 24a présente une zone périphérique concave 25, sensiblement hémicirculaire. La périphérie de la demi-coquille 24a définit quatre renflements 26a-26d présentant chacun un bord d'attaque 29 et un bord de fuite 27. Comme on le voit, le renflement va en décroissant du bord de fuite 27 au bord d'attaque 28. La partie centrale 29 de la demi-coquille 24a est sensiblement plane. Comme il ressort encore de la figure 2, il est prévu, dans le renflement 26b, une bougie d'allumage 30, un injecteur d'essence 31 et un injecteur d'air 32. Il est à noter que l'injecteur 31 pourrait être un injecteur de mélange gazeux auquel cas l'injecteur d'air 32 pourrait être supprimé. Les renflements 26a, 26c, 26d comportent les mêmes équipements et on ne les a pas représentés pour ne pas surcharger le dessin.

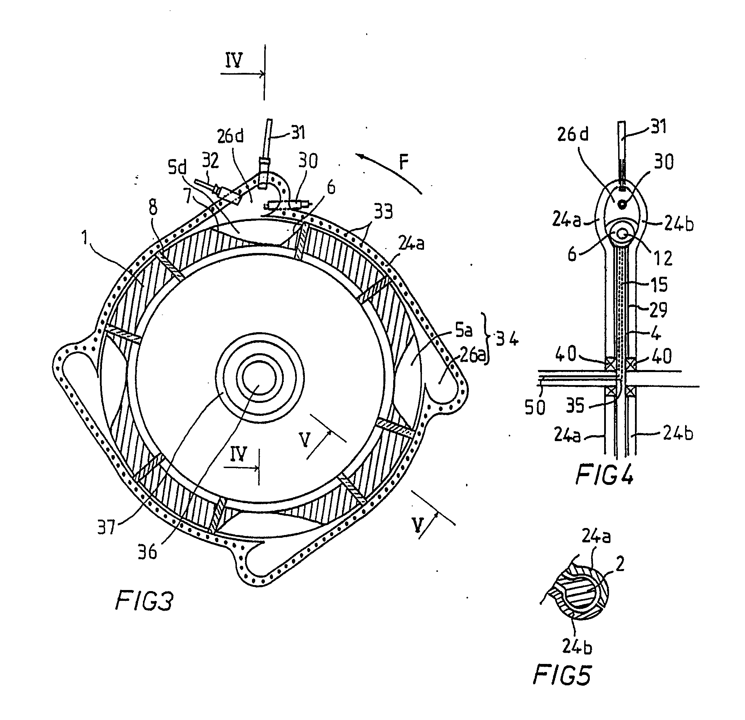

La figure 3 montre le piston de la figure 1 dans la demi-coquille 24a de la figure 2. Une demi-coquille 24b (figures 4 et 5) vient s'appliquer sur la demi-coquille 24a en enfermant le piston 1 entre elles. A cet effet, les demi-coquilles présentent chacune une bride traversée de perçages filetés 33 comme on le voit sur les figures 2 et 3. Ces brides ne sont pas représentées à l'échelle et elles ont été omises sur les coupes des figures 4 et 5.

On comprend que la rotation du piston 1 dans l'enveloppe que constituent les deux demi-coquilles 24a et 24b amène en correspondance les découpes 5a-5d respectivement avec les renfleme nts 26a-26d. L'ensemble formé par une découpe et un renflement en vis-à-vis définit une chambre d'explosion 34. Comme on le voit, coté bord d'attaque 7, les découpes 5a-5d opposent une plus grande surface d'appui à la poussée résultant de l'explosion que leur bord de fuite 6 ce qui favorise la rotation du rotor dans le sens de la flèche F. Les segments 8 ont davantage un rôle de guidage que d'étanchéité.

La coupe de la figure 4 prise au travers d'une chambre d'explosion montre que le canal d'échappement 15 communique avec un collecteur radial 35 qui débouche lui-même dans une sortie d'échappement 50.

La référence 36 désigne l'axe du vilebrequin et la référence 37 désigne la partie d'une cage de roulement à billes dépendant du piston, l'autre partie 38 de la cage dépendant des demi- coquilles de l'enveloppe. Les cages 37, 38 et les billes 39 définissent ensemble les roulements 40 que l'on retrouve à la figure 4.

On comprend que, sous l'effet d'une explosion commandée d'une manière connue en soi et synchronisée avec la compression du mélange gazeux dans les chambres d'explosion, compression résultant de la rotation du piston après venue en coïncidence d'une découpe 5a-5d avec un renflement 26a-26d, une poussée s'exerce sur la face d'attaque 7 de la découpe constituant la chambre d'explosion 34 correspondante et qu'il s'ensuit la rotation du piston. Sous l'effet de moyens de commande également connus, la soupape 12,13 s'ouvre et les gaz d'échappement sont évacués par le passage 6 et le canal 15 vers le collecteur 35.

Pour lancer le moteur, on commande l'explosion simultanément dans les quatre chambres 34. Des capteurs électro-magnétiques non représentés et reliés à un ordinateur commandent ensuite un allumage décalé dans le temps. Le moteur tournant de plus en plus vite, il sera nécessaire de réaliser des conditions d'avance à l'allumage : l'impulsion sera envoyée avant que la découpe 5a-5d passe au niveau de la cavité 26a-26d.

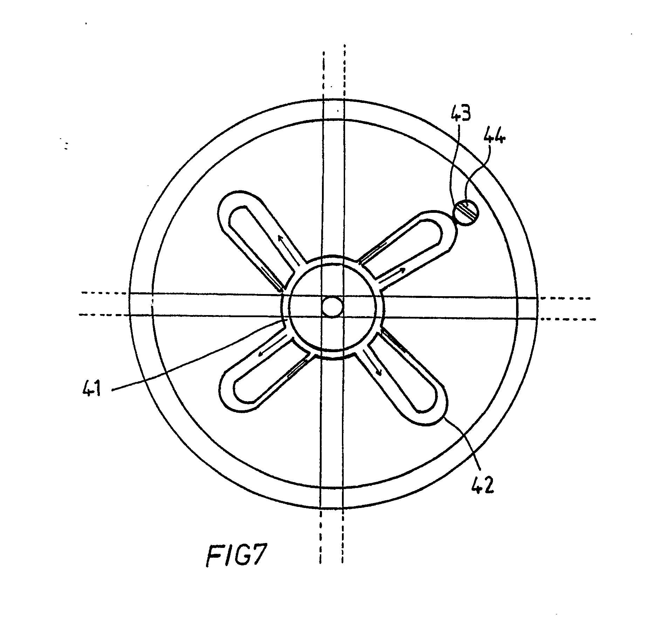

La figure 7 montre une forme d'exécution possible de moyens de graissage du piston. A cet effet, il est prévu un canal d'alimentation circulaire 41 en communication avec des canaux de graissage 42 ayant généralement une configuration en U, l'extrémité libre des branches du U étant l'une et l'autre en communication avec le canal d'alimentation 41. La section des canaux de graissage en U va en décroissant depuis l'une des extrémités libres d'une branche vers son autre extrémité libre de façon à favoriser l'écoulement de l'huile dans le sens des flèches, qui correspond au sens de la plus grande facilité. Un orifice d'introduction d'huile 43 fermé par une vis 44 communique avec l'un des canaux de graissage pour le remplissage de l'ensemble.

Si l'on revient à la figure 2, on voit que le roulement 38-39 est en communication avec quatre compartiments 45a-45d formant réservoirs d'huile. Le compartiment supérieur 45c est muni d'un orifice 46 de remplissage d'huile fermé par un bouchon approprié et le compartiment inférieur 45a est muni d'un orifice d'évacuation d'huile 47 également fermé par un bouchon approprié. La référence 48 désigne une jauge graduée équipant l'un des compartiments latéraux 45b.

A la figure 2, les zones en grisé représentent l'huile contenue dans les compartiments.

Les références 49 et 50 désignent des passages pour un liquide de refroidissement.

## Revendications

1 - Moteur à explosion du type rotatif comprenant un stator formant enveloppe (24a,24b) et un rotor (1) formant piston, l'enveloppe et le piston définissant ensemble des chambres d'explosion (38) munies de moyens d'allumage (30) et alimentées en carburant (31) et en air (32), le piston (1) étant constitué d'une pièce ayant en coupe généralement la forme d'un disque dans l'épaisseur de la périphérie duquel sont ménagées autant de découpes (5a-5d) que de chambres d'explosion (34) et l'enveloppe (24a,24b) étant constituée d'au moins deux pièces formant une structure généralement circulaire dans la périphérie de laquelle sont ménagés autant de renflements (26a-26d) que de chambres d'explosion (34), lesdites chambres d'explosion (34) étant définies par la venue en vis-à-vis d'une découpe (5a-5d) du piston (1) et d'un renflement (26a-26d) de l'enveloppe (24a,24b), caractérisé en ce que, dans l'épaisseur du piston (1), entre chaque groupe de deux découpes (5a-5b; 5b-5c; 5c-5d et 5d-5a), dit "espace inter-découpes" (I), est menagé un passage (58) débouchant dans l'une des découpes (5a) et en communication avec un canal d'échappement (15), ledit passage (58) recevant la queue (13) d'une soupape d'échappement dont la tête (12) est adaptée à permettre ou à interdire la communication entre le passage (58) et la chambre d'explosion correspondante (34).

2 - Moteur selon la revendication 1, caractérisé en ce que chaque espace inter-découpes (5) reçoit, en outre, des moyens de retenue et de réglage (22), ainsi que des moyens de rappel (16) agissant sur la queue de soupape.

3 - Moteur selon la revendication 1 ou 2, caractérisé en ce que les canaux d'échappement (15) susceptibles d'être mis en communication avec les chambres d'explosion (34) convergent radialement vers un collecteur central (35) réuni à une sortie d'échappement (50).

4 - Moteur selon l'une quelconque des revendications 1 à 3, caractérisé en ce que l'enveloppe est constituée de deux demi-coquilles (24a,24b) de section sensiblement circulaire adaptées à être assemblées en vis-à-vis, avec inclusion du piston (1) entre elles.

F

5d

8

8

2    1

3

7

5c

5a

6

4

5b

*FIG1*

45c    46    26d    24a

50    25

26c    33

29    28

48

45b    26a

39

38    45d    27

45a

30    49

*FIG2*    26b

31    32    47

FIG3

FIG4

FIG5

FIG6

FIG7

**Office européen des brevets**

**RAPPORT DE RECHERCHE EUROPEENNE**

Numéro de la demande

**EP 90 40 2366**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,A | FR-A-2 406 073 (SEMERY)<br>* page 2, ligne 5 - page 2, ligne 33; figure 2 *<br>— — — | 1,2,3 | F 02 B 55/14 |
| Y | FR-A-4 010 41 (ROCH)<br>* page 1, ligne 49 - page 2, ligne 93; figures 1-5 *<br>— — — | 1 | |
| A | FR-A-2 446 924 (BRENIER)<br>* le document en entier *<br>— — — | 1 | |
| A | GB-A-3 778 77 (BACHMANN)<br>* page 1, ligne 42 - page 2, ligne 43; figures 1, 2, 3 *<br>— — — | 1 | |
| A | DE-A-3 247 712 (TAPPEN)<br>* pages 2 - 3; figures 1-3 *<br>— — — | 1 | |
| A | US-A-4 807 440 (SALEM)<br>* figure 1 *resumé *<br>— — — | 1 | |
| A | US-A-3 913 534 (BRATTEN)<br>— — — — — | | |
| | | | **DOMAINES TECHNIQUES RECHERCHES (Int. Cl.5)**<br><br>F 02 B<br>F 02 C |

Le présent rapport de recherche a été établi pour toutes les revendications

| Lieu de la recherche | Date d'achèvement de la recherche | Examinateur |
|---|---|---|
| La Haye | 29 octobre 90 | MOUTON J.M.M.P. |